# EUROPEAN PATENT APPLICATION

(11) **EP 4 426 050 A1**
(43) Date of publication of application: **04.09.2024**
(21) Application number: 22886139.9
(22) Date of filing: 28.10.2022
(51) Int. Cl.: H04W 74/00

(54) **INFORMATION REPORTING METHOD, TERMINAL DEVICE, AND NETWORK SIDE DEVICE**

(30) Priority: 28.10.2021 CN 202111260246
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: LIU, Liang, Beijing 100053 (CN); HUANG, Xueyan, Beijing 100053 (CN); HU, Nan, Beijing 100053 (CN)
(74) Representative: J A Kemp LLP
(86) International application number: PCT/CN2022/128339
(87) International publication number: WO 2023/072264

(57) **Abstract**

Disclosed in the present application are an information reporting method, a terminal device, and a network side device. The method comprises: a terminal device acquiring or recording related information during data transmission in a radio resource control (RRC) inactive state; and reporting the related information to a network side device.

## Description

### CROSS-REFERENCE TO RELATED APPLICATION

This application is filed based on and claims priority to Chinese Patent application No. 202111260246.9 filed on October 28, 2021, the content of which is hereby incorporated by reference in its entirety.

### TECHNICAL FIELD

The disclosure relates to the technical field of communications, and in particular to a method for reporting information, a terminal device, and a network side device.

### BACKGROUND

In a fifth-generation (5G) mobile communication technology, a Radio Resource Control (RRC) inactive (which may be expressed as RRC_Inactive) state is newly introduced. In the related art, a terminal device may transmit a small data packet through a Random Access Channel (RACH) or a Configured Grant (CG) procedure in the RRC inactive state, without entering an RRC connected state.

However, the terminal device cannot transmit data in the RRC inactive state arbitrarily. A network side device (such as a base station) needs to configure many conditions and parameters for the terminal device, such as a data packet size, a transmission resource, a transmission type, etc. The terminal device may ensure smoothly sending the small data packet to the network side device only when these conditions are met and appropriate parameters are used. However, in practice, initial values of various conditions and parameters configured by the network side device may only rely on experience, and a failure may occur when the terminal device performs transmission of the small data packet (also referred to as a Small Data Transmission (SDT)) based on these configurations, while it is difficult for the network side device to find out the problem of transmission failure, thereby easily causing continuous deterioration of network performance.

### SUMMARY

In order to solve the problem in the related art, embodiments of the disclosure provide a method for reporting information, a terminal device, and a network side device.

In a first aspect, an embodiment of the disclosure provides a method for reporting information, and the method includes the following operations.

A terminal device acquires or logs relevant information during data transmission in an RRC inactive state.

The relevant information is reported to a network side device.

In the above solution, the operation of reporting the relevant information to the network side device may include one of: reporting the relevant information to the network side device in an RRC connected state; reporting the relevant information to the network side device during a transition to the RRC connected state; reporting the relevant information to the network side device in the RRC inactive state; or reporting the relevant information to the network side device during a random access procedure.

In the above solution, the operation of reporting the relevant information to the network side device may include the following action.

The relevant information is reported to the network side device based on a request from the network side device.

In the above solution, the operation of reporting the relevant information to the network side device based on the request from the network side device may include the following actions.

An indication message is sent to the network side device, and the indication message indicates that the terminal device logs the relevant information.

An information reporting request is received from the network side device.

The relevant information is reported to the network side device in response to the information reporting request.

In the above solution, the method may further include the following operation after reporting the relevant information to the network side device.

Target configuration information is received from the network side device, and the target configuration information is obtained by the network side device after adjusting configuration information for data transmission in the RRC inactive state based on the relevant information.

In the above solution, the relevant information may include at least one of: data packet information; Timing Advance (TA) information in case that data is transmitted using a CG resource; Reference Signal Receiving Power (RSRP) information; transmission type information; fallback information generated when the data is transmitted; transmission resource information; power ramping step information when a preamble is sent to the network side device; carrier information; Bandwidth Part (BWP) information; number of transmission failures; a logical channel scheduling request delay timer; or a T319a timer.

In the above solution, the data packet information may include at least one of: a size of to-be-transmitted data volume; a data volume threshold configured by a network; or whether the size of the to-be-transmitted data volume exceeds the data volume threshold configured by the network.

In the above solution, the TA information may include at least one of: a TA value, a TA valid time, whether the TA valid time is exceeded, or Synchronization Signal and PBCH block (SSB) information corresponding to the CG resource.

In the above solution, the RSRP information may include at least one of: an RSRP value when the data is transmitted; an RSRP threshold configured by a network when an SDT is selected; an RSRP threshold configured by the network when a non-SDT is selected; an RSRP threshold configured by the network and corresponding to an SSB sent when the SDT is selected; whether the RSRP value when the data is transmitted is higher than the RSRP threshold configured by the network when the SDT is selected; whether the RSRP value when the data is transmitted is higher than the RSRP threshold configured by the network when the non-SDT is selected; whether the RSRP value when the data is transmitted is higher than the RSRP threshold configured by the network and corresponding to the SSB sent when the SDT is selected; or whether the RSRP value when the data is transmitted is higher than an RSRP threshold corresponding to a valid CG resource.

In the above solution, the transmission type information may indicate that a CG or a random access procedure is used when the data is transmitted.

Optionally, the transmission type information may further indicate that a 2-step random access or a 4-step random access is selected when the data is transmitted using an RACH.

In the above solution, the fallback information may indicate a fallback from a use of a CG to a use of a 2-step RACH or a fallback from the use of the 2-step RACH to a use of a 4-step RACH, when the data is transmitted.

In the above solution, the transmission resource information may indicate that the CG resource or a Physical Uplink Shared Channel (PUSCH) resource is used when the data is transmitted.

In the above solution, the carrier information may indicate that a Supplementary Uplink (SUL) carrier or an Uplink (UL) carrier is used when the data is transmitted.

In a second aspect, an embodiment of the disclosure further provides another method for reporting information, and the method includes the following operation.

A network side device receives relevant information reported by a terminal device, and the relevant information is acquired or logged by the terminal device during data transmission in an RRC inactive state.

In the above solution, the method may further include the following operations after the network side device receives the relevant information reported by the terminal device.

The network side device performs a rationality analysis on configuration information for data transmission in the RRC inactive state based on the relevant information.

The configuration information is adjusted when the configuration information is determined to be unreasonable, to obtain target configuration information.

The target configuration information is sent to the terminal device.

In the above solution, the operation of receiving, by the network side device, the relevant information reported by the terminal device may include the following actions.

The network side device receives an indication message from the terminal device, and the indication message indicates that the terminal device logs the relevant information.

An information reporting request is sent to the terminal device.

The relevant information reported by the terminal device is received.

In the above solution, the relevant information may include at least one of: data packet information; TA information in case that data is transmitted using a CG resource; RSRP information; transmission type information; fallback information generated when the data is transmitted; transmission resource information; power ramping step information when a preamble is sent to the network side device; carrier information; BWP information; number of transmission failures; a logical channel scheduling request delay timer; or a T319a timer.

In the above solution, the data packet information may include at least one of: a size of to-be-transmitted data volume; a data volume threshold configured by a network; or whether the size of the to-be-transmitted data volume exceeds the data volume threshold configured by the network.

In the above solution, the TA information may include at least one of: a TA value, a TA valid time, whether the TA valid time is exceeded, or SSB information corresponding to the CG resource.

In the above solution, the RSRP information may include at least one of: an RSRP value when the data is transmitted; an RSRP threshold configured by a network when an SDT is selected; an RSRP threshold configured by the network when a non-SDT is selected; an RSRP threshold configured by the network and corresponding to an SSB sent when the SDT is selected; whether the RSRP value when the data is transmitted is higher than the RSRP threshold configured by the network when the SDT is selected; whether the RSRP value when the data is transmitted is higher than the RSRP threshold configured by the network when the non-SDT is selected; whether the RSRP value when the data is transmitted is higher than the RSRP threshold configured by the network and corresponding to the SSB sent when the SDT is selected; or whether the RSRP value when the data is transmitted is higher than an RSRP threshold corresponding to a valid CG resource.

In the above solution, the transmission type information may indicate that a CG or a random access procedure is used when the data is transmitted.

Optionally, the transmission type information may indicate that a 2-step random access or a 4-step random access is selected when the data is transmitted using an RACH.

In the above solution, the fallback information may indicate a fallback from a use of a CG to a use of a 2-step RACH or a fallback from the use of the 2-step RACH to a use of a 4-step RACH, when the data is transmitted.

In the above solution, the transmission resource information may indicate that the CG resource or a PUSCH resource is used when the data is transmitted.

In the above solution, the carrier information may indicate that an SUL carrier or a UL carrier is used when the data is transmitted.

In a third aspect, an embodiment of the disclosure further provides a terminal device, and the terminal device includes a transceiver and a processor.

The processor is configured to acquire or log relevant information during data transmission in an RRC inactive state.

The transceiver is configured to report the relevant information to a network side device.

In the above solution, the transceiver may be further configured to perform one of: reporting the relevant information to the network side device in an RRC connected state; reporting the relevant information to the network side device during a transition to the RRC connected state; reporting the relevant information to the network side device in the RRC inactive state; or reporting the relevant information to the network side device during a random access procedure.

In the above solution, the transceiver may be further configured to report the relevant information to the network side device based on a request from the network side device.

In the above solution, the transceiver may be further configured to: send an indication message to the network side device, the indication message indicating that the terminal device logs the relevant information; receive an information reporting request from the network side device; and report the relevant information to the network side device in response to the information reporting request.

In the above solution, the transceiver may be further configured to receive target configuration information from the network side device. The target configuration information is obtained by the network side device after adjusting configuration information for data transmission in the RRC inactive state based on the relevant information.

In the above solution, the relevant information may include at least one of: data packet information; TA information in case that data is transmitted using a CG resource; RSRP information; transmission type information; fallback information generated when the data is transmitted; transmission resource information; power ramping step information when a preamble is sent to the network side device; carrier information; BWP information; number of transmission failures; a logical channel scheduling request delay timer; or a T319a timer.

In the above solution, the data packet information may include at least one of: a size of to-be-transmitted data volume; a data volume threshold configured by a network; or whether the size of the to-be-transmitted data volume exceeds the data volume threshold configured by the network.

In the above solution, the TA information may include at least one of: a TA value, a TA valid time, whether the TA valid time is exceeded, or SSB information corresponding to the CG resource.

In the above solution, the RSRP information may include at least one of: an RSRP value when the data is transmitted; an RSRP threshold configured by a network when an SDT is selected; an RSRP threshold configured by the network when a non-SDT is selected; an RSRP threshold configured by the network and corresponding to an SSB sent when the SDT is selected; whether the RSRP value when the data is transmitted is higher than the RSRP threshold configured by the network when the SDT is selected; whether the RSRP value when the data is transmitted is higher than the RSRP threshold configured by the network when the non-SDT is selected; whether the RSRP value when the data is transmitted is higher than the RSRP threshold configured by the network and corresponding to the SSB sent when the SDT is selected; or whether the RSRP value when the data is transmitted is higher than an RSRP threshold corresponding to a valid CG resource.

In the above solution, the transmission type information may indicate that a CG or a random access procedure is used when the data is transmitted.

Optionally, the transmission type information may indicate that a 2-step random access or a 4-step random access is selected when the data is transmitted using an RACH.

In the above solution, the fallback information may indicate a fallback from a use of a CG to a use of a 2-step RACH or a fallback from the use of the 2-step RACH to a use of a 4-step RACH, when the data is transmitted.

In the above solution, the transmission resource information may indicate that the CG resource or a PUSCH resource is used when the data is transmitted.

In the above solution, the carrier information may indicate that an SUL carrier or a UL carrier is used when the data is transmitted.

In a fourth aspect, an embodiment of the disclosure further provides a network side device, and the network side device includes a transceiver and a processor.

The transceiver is configured to receive relevant information reported by a terminal device, and the relevant information is acquired or logged by the terminal device during data transmission in an RRC inactive state.

In the above solution, the processor may be further configured to: perform a rationality analysis on configuration information for data transmission in the RRC inactive state based on the relevant information; and adjust the configuration information when the configuration information is determined to be unreasonable, to obtain target configuration information.

The transceiver may be further configured to send the target configuration information to the terminal device.

In the above solution, the transceiver may be further configured to: receive an indication message from the terminal device, the indication message indicating that the terminal device logs the relevant information; send an information reporting request to the terminal device; and receive the relevant information reported by the terminal device.

In the above solution, the relevant information may include at least one of: data packet information; TA information in case that data is transmitted using a CG resource; RSRP information; transmission type information; fallback information generated when the data is transmitted; transmission resource information; power ramping step information when a preamble is sent to the network side device; carrier information; BWP information; number of transmission failures; a logical channel scheduling request delay timer; or a T319a timer.

In the above solution, the data packet information may include at least one of: a size of to-be-transmitted data volume; a data volume threshold configured by a network; or whether the size of the to-be-transmitted data volume exceeds the data volume threshold configured by the network.

In the above solution, the TA information may include at least one of: a TA value, a TA valid time, whether the TA valid time is exceeded, or SSB information corresponding to the CG resource.

In the above solution, the RSRP information may include at least one of: an RSRP value when the data is transmitted; an RSRP threshold configured by a network when an SDT is selected; an RSRP threshold configured by the network when a non-SDT is selected; an RSRP threshold configured by the network and corresponding to an SSB sent when the SDT is selected; whether the RSRP value when the data is transmitted is higher than the RSRP threshold configured by the network when the SDT is selected; whether the RSRP value when the data is transmitted is higher than the RSRP threshold configured by the network when the non-SDT is selected; whether the RSRP value when the data is transmitted is higher than the RSRP threshold configured by the network and corresponding to the SSB sent when the SDT is selected; or whether the RSRP value when the data is transmitted is higher than an RSRP threshold corresponding to a valid CG resource.

In the above solution, the transmission type information may indicate that a CG or a random access procedure is selected when the data is transmitted.

Optionally, the transmission type information may further indicate that a 2-step random access or a 4-step random access is selected when the data is transmitted using an RACH.

In the above solution, the fallback information may indicate a fallback from a use of a CG to a use of a 2-step RACH or a fallback from the use of the 2-step RACH to a use of a 4-step RACH, when the data is transmitted.

In the above solution, the transmission resource information may indicate that the CG resource or a PUSCH resource is used when the data is transmitted.

In the above solution, the carrier information may indicate that an SUL carrier or a UL carrier is used when the data is transmitted.

In a fifth aspect, an embodiment of the disclosure further provides a terminal device. The terminal device includes a transceiver, a memory, a processor, and a computer program stored on the memory and executable on the processor. The processor is configured to implement operations of the method for reporting information described in the first aspect when executing the computer program.

In a sixth aspect, an embodiment of the disclosure further provides a network side device. The network side device includes a transceiver, a memory, a processor, and a computer program stored on the memory and executable on the processor. The processor is configured to implement operations of the method for reporting information described in the second aspect when executing the computer program.

In a seventh aspect, an embodiment of the disclosure further provides a computer-readable storage medium. The computer-readable storage medium has stored thereon a computer program that, when executed by a processor, causes the processor to execute operations of the method for reporting information described in the first aspect or operations of the method for reporting information described in the second aspect.

In the embodiments of the disclosure, the terminal device acquires or logs the relevant information during data transmission in the RRC inactive state, and reports the relevant information to the network side device. In this way, the terminal device logs the relevant information when the data is transmitted in the RRC inactive state and reports the relevant information to the network side device, so that the network side device can obtain feedback information during the transmission, which helps the network side device to analyze whether the configuration information during the data transmission in the RRC inactive state is reasonable based on the obtained feedback information, and then improve network performance by optimizing the unreasonable configuration information. Therefore, at least the problem that the data transmission mode in the RRC inactive state easily causes continuous deterioration of network performance may be solved.

### BRIEF DESCRIPTION OF THE DRAWINGS

In order to explain technical solutions of the embodiments of the disclosure more clearly, the drawings to be used in the description of the embodiments of the disclosure will be briefly introduced below. It is apparent that the drawings in the following description are only some embodiments of the disclosure, and other drawings may also be obtained by those of ordinary skill in the art according to these drawings, without paying any creative work.
FIG. 1 is a first flowchart of a method for reporting information provided in an embodiment of the disclosure.
FIG. 2 is a first flowchart of sending data in an RRC inactive state by a terminal device provided in an embodiment of the disclosure.
FIG. 3 is a second flowchart of sending data in an RRC inactive state by a terminal device provided in an embodiment of the disclosure.
FIG. 4 is a flowchart of a contention-based 4-step RACH provided in an embodiment of the disclosure.
FIG. 5 is a flowchart of a contention-based 2-step RACH provided in an embodiment of the disclosure.
FIG. 6 is a second flowchart of a method for reporting information provided in an embodiment of the disclosure.
FIG. 7 is a first structural diagram of a terminal device provided in an embodiment of the disclosure.
FIG. 8 is a first structural diagram of a network side device provided in an embodiment of the disclosure.
FIG. 9 is a second structural diagram of a terminal device provided in an embodiment of the disclosure.
FIG. 10 is a second structural diagram of a network side device provided in an embodiment of the disclosure.

### DETAILED DESCRIPTION

The technical solutions in the embodiments of the disclosure will be clearly and completely described below with reference to the drawings in the embodiments of the disclosure. It is apparent that the described embodiments are part of the embodiments of the disclosure, rather than all of the embodiments. All other embodiments obtained by those of ordinary skill in the art based on the embodiments of the disclosure without paying any creative work shall fall within the scope of protection of the disclosure.

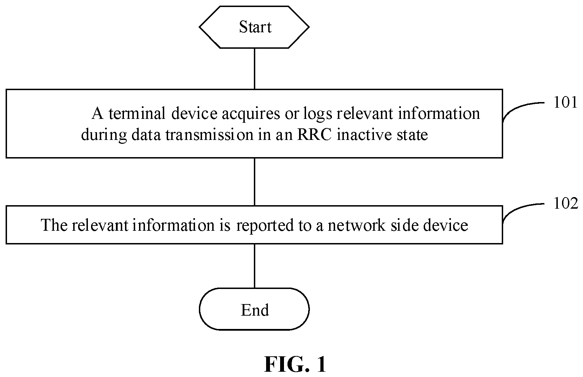

With reference to FIG. 1, FIG. 1 is a flowchart of a method for reporting information provided in an embodiment of the disclosure, and as shown in FIG. 1, the method includes the following operations 101 and 102.

In operation 101, a terminal device acquires or logs relevant information during data transmission in a Radio Resource Control (RRC) inactive state.

In 5G communication, in addition to an RRC idle state and an RRC connected (which may be expressed as RRC_Connected) state, an RRC inactive (RRC _Inactive) state is also newly introduced for the terminal device, which is an intermediate state between the RRC idle state and the RRC connected state, with a main purpose of quickly enabling the terminal device to enter the RRC connected state and complete an establishment of a Protocol Data Unit (PDU) session while saving resources and energy as much as possible, to meet requirements of ultra-reliable and low-delay scenarios proposed by 5G.

When the terminal device is in the RRC inactive state, and a network side device (such as a base station) pages the terminal device or the terminal device initiates an update of a Radio Access Network based notification area (RNA), the terminal device will initiate an RRC connection resume procedure, which specifically includes the following operations 1 to 3.

In operation 1, the terminal device sends a connection establishment resume (RRC Resume Request) message, which includes a resume identifier (ID), a connection resume reason, security parameters, etc.

In operation 2, when the base station allows the terminal device to resume connection, the base station may send a connection resume (RRC Resume) message, which includes a radio bearer configuration, etc.

In operation 3, after receiving the connection resume message, the terminal device may send a connection resume complete (RRC Resume Complete) message, and resume a Signaling Radio Bearer (SRB) and all Data Radio Bearers (DRBs).

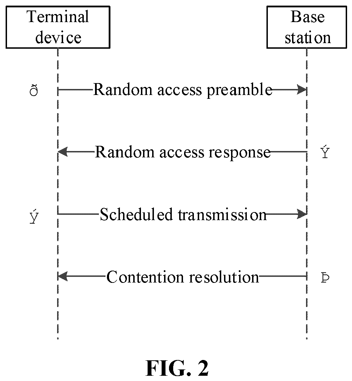

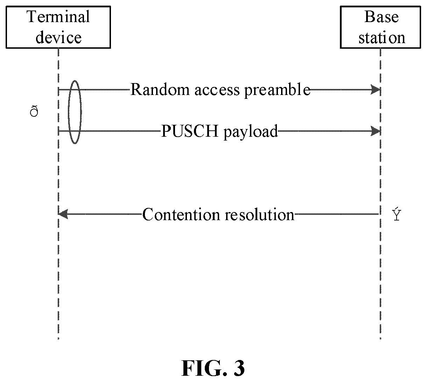

When the terminal device resuming the connection from the RRC inactive state, a random access procedure is required necessarily. In the related art, a 4-step Random Access Channel (RACH) procedure is formulated first, and in order to further reduce an RACH delay, a 2-step RACH procedure is formulated subsequently. A contention-based 2-step RACH procedure and a contention-based 4-step RACH procedure are shown in FIG. 2 and FIG. 3 respectively.

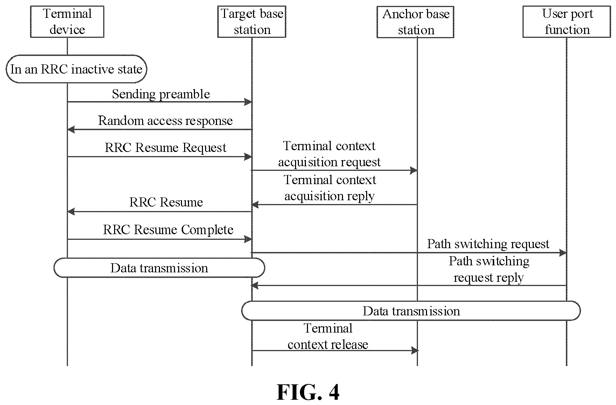

The embodiments of the disclosure may be applied to a scenario where the terminal device transmits a small data packet to the network side device in the RRC inactive state. In the related art, as shown in FIG. 4, if the terminal device in the RRC inactive state wants to send data, the terminal device must resume connection to resume SRB and DRB, and enter the RRC connected state to send data. With respect to a Small Data Transmission (SDT), this manner easily causes a waste of signaling resources, consumes extra power consumption of the terminal device, and increases a transmission delay.

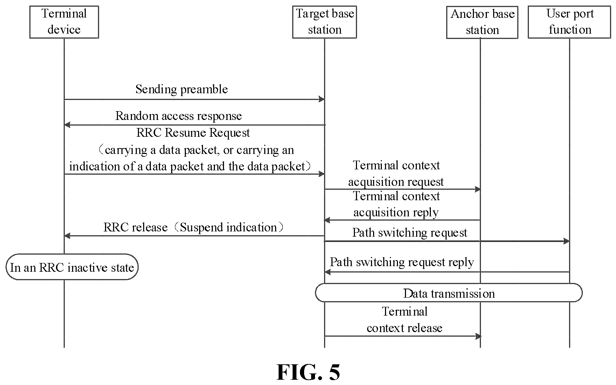

In order to overcome the problem of the transmission manner shown in FIG. 4, a manner of sending a small packet data in the RRC inactive state is proposed and shown in FIG. 5. As shown in FIG. 5, the terminal device may transmit Uplink (UL) data and Downlink (DL) data through an RACH procedure or a Configured Grant (CG) procedure in the RRC inactive state, without entering the RRC connected state, so that a purpose of saving delay and network signaling overhead may be achieved.

However, the terminal device cannot transmit the UL data and DL data in the RRC connected state arbitrarily, and the network side device needs to configure many conditions and parameters for the terminal device. Most of these parameters and conditions are specific to an SDT transmission. The terminal device may ensure smoothly sending the small data packet to the network side device only when these conditions are met and appropriate parameters are used. However, in practice, initial values of various conditions and parameters configured by the network side device may only rely on experience, and these conditions and parameters configured by the network may not be optimal. Therefore, it is necessary to iteratively optimize these configurations through some feedback from the terminal device. For example, a failure situation may occur when the terminal device performs transmission of the small data packet based on these conditions. If the network side device does not know failure information, the network side device cannot optimize the conditions and parameters of these configurations, thereby causing deterioration of network performance and user experience.

In the embodiments of the disclosure, there are solutions proposed to solve the above problem that the network side device cannot know the failure information in the SDT and thus cannot optimize the configuration conditions and parameters. The terminal device logs and reports relevant information when the data is transmitted in the RRC inactive state, so that the network side device obtains feedback information of transmission failure, which then helps the network side device to find out the problem of transmission failure based on the feedback information, and solve the problem of transmission failure by optimizing the configuration conditions and parameters, thereby optimizing the network performance of transmitting data in the RRC inactive state.

Specifically, when the terminal device transmits data in the RRC inactive state, for example, transmits a data packet to the network side device, the terminal device acquires or logs relevant information during the transmission, such as a size of the transmitted data packet, Reference Signal Receiving Power (RSRP), a transmission type, a transmission resource, number of transmission failures, or other information. The above network side device may be a base station, a server, or other network side devices.

In operation 102, the relevant information is reported to a network side device.

In this operation, the acquired or logged relevant information may be reported to the network side device, so that the network side device may perform a rationality analysis on configuration information for data transmission in the RRC inactive state based on the received relevant information, to timely find reasons for the data transmission failure in the RRC inactive state, and optimize and adjust the configuration information, thereby ensuring that the terminal device sends data in the RRC inactive state successfully.

For example, the network side device may analyze whether a data packet threshold configured for the terminal device is reasonable, based on the size the data packet in the relevant information; or may analyze whether an RSRP threshold configured for the terminal device is reasonable, based on the RSRP in the relevant information; or may analyze whether the transmission failure occurs due to unreasonable configuration information of which transmission type, based on the transmission type in the relevant information, etc.

In an embodiment, the operation 102 includes one of: reporting the relevant information to the network side device in an RRC connected state; reporting the relevant information to the network side device during a transition to the RRC connected state; reporting the relevant information to the network side device in the RRC inactive state; or reporting the relevant information to the network side device during a random access procedure.

That is, the terminal device may report the relevant information in multiple manners. Specifically, the terminal device may report the relevant information to the network side device in the RRC connected state; or may report the relevant information to the network side device during the transition to the RRC connected state, for example, when a resume connection is initiated from the RRC inactive state to enter the RRC connected state; or may report the relevant information to the network side device in the RRC inactive state, specifically, sending the transmission message through a newly defined message; or may report the relevant information to the network side device during the random access procedure, for example, when a random access request is initiated.

In this way, it may be ensured that reporting manners are relatively flexible by reporting the relevant information in the above manners, and an appropriate occasion may be selected to report the relevant information, to avoid occupying signaling resources excessively.

In an embodiment, the operation 102 includes the following action.

The relevant information is reported to the network side device based on a request from the network side device.

The terminal device may report the relevant information actively, or the network side device may request reporting, that is, the terminal device may report the relevant information to the network side device based on the request from the network side device. For example, the terminal device may report the relevant information to the network side device, in response to receiving an information reporting request from the network side device. In this way, reporting may be achieved based on demands, and unnecessary network overhead may be avoided.

Further, the operation of reporting the relevant information to the network side device based on the request from the network side device includes the following actions.

An indication message is sent to the network side device, and the indication message indicates that the terminal device logs the relevant information.

An information reporting request is received from the network side device.

The relevant information is reported to the network side device in response to the information reporting request.

In an implementation, after collecting the relevant information, the terminal device may send the indication message to the network side device, to inform the network side device that the relevant information is logged currently and may be reported, and whether the relevant information needs to be reported. After receiving the indication message, the network side device may send the information reporting request to the terminal device if the network side device requires the terminal device to report the relevant information. After receiving the information reporting request, the terminal device may report the relevant information to the network side device.

In this way, reporting may be achieved based on negotiation and demands by sending an information logging indication to the network side device.

In an embodiment, the relevant information includes at least one of: data packet information; Timing Advance (TA) information in case that data is transmitted using a CG resource; RSRP information; transmission type information; fallback information generated when the data is transmitted; transmission resource information; power ramping step information (which may be expressed as a Power Ramping Step) when a preamble is sent to the network side device; carrier information; Bandwidth Part (BWP) information; number of transmission failures; a logical channel scheduling request delay timer; or a T319a timer.

In an implementation, the terminal device may report one or more of: the data packet information, the TA information when the data is transmitted using the CG resource, the RSRP information, the transmission type information, the fallback information generated when the data is transmitted, the transmission resource information, the power ramping step information when the preamble is sent to the network side device, the carrier information, the BWP information, the number of transmission failures, the logical channel scheduling request delay timer, the T319a timer or the like, to the network side device.

The data packet information may be information indicating a size of the transmitted data packet, or a data packet threshold configured by the network, and may be used by the network side device to analyze whether the data packet threshold was not configured properly when the transmission fails.

The TA information in case that the data is transmitted using the CG resource may indicate TA information when the terminal device transmits the data packet using the CG resource, and may be used by the network side device to analyze whether a TA threshold was not configured properly when the transmission fails.

The RSRP information may indicate a value of RSRP when the terminal device transmits the data packet, or an RSRP threshold configured by the network, and may be used by the network side device to analyze whether the RSRP threshold was not configured properly when the transmission fails.

The transmission type information may indicate a transmission type used by the terminal device when it transmits the data packet, such as a CG type or an RACH type, and may be used by the network side device to analyze whether transmission failure occurs due to unreasonable configuration of which type of transmission resource.

The fallback information generated when the data is transmitted may indicate whether a fallback occurs when the terminal device transmits the data packet, or specifically indicate a fallback from which type to another type, such as a fallback from a 2-step random access procedure to a 4-step random access procedure, and the fallback information may be used by the network side device to analyze exactly what type of failure the transmission failure is, and whether there is a problem of unreasonable resource configuration.

The transmission resource information may indicate a resource used by the terminal device when it transmits the data packet, such as a CG resource or a Physical Uplink Shared Channel (PUSCH) resource, and may be used by the network side device to analyze whether the allocated transmission resource is unreasonable when the transmission fails.

The power ramping step information when the preamble is sent to the network side device may indicate power ramping step information when the terminal device sends the preamble in a 2-step or 4-step random access procedure before transmitting the data packet, and may be used by the network side device to analyze whether the transmission failure occurs due to an insufficient transmission power.

The carrier information may indicate a carrier selected by the terminal device when it transmits the data packet, such as a Supplementary Uplink (SUL) carrier or a UL carrier, and may be used by the network side device to analyze whether there is a problem of an unreasonable allocation of a carrier resource when the transmission fails.

The BWP information may indicate bandwidth information selected by the terminal device when it transmits the data packet, and may be used by the network side device to analyze whether there is a problem of an insufficient bandwidth resource allocation when the transmission fails.

The number of transmission failures may indicate a number of failures occurred to the terminal device when it transmits the data packet, and may be used by the network side device to analyze whether the transmission failure occurs due to a problem of the terminal device itself or due to an unreasonable parameter configured for the terminal device, based on a total number of counted failures.

In case that the terminal device reports multiple or all of the above information, the network side device may perform a more comprehensive judgment and analysis by combining the above information, locate the configuration problem quickly and accurately, and optimize the configuration information timely, to improve the network performance.

In this way, it may well help the network side device to find out the problems of the transmission failure by reporting one or more of the above information to the network side device, and then a successful transmission of a subsequent small packet data is ensured by solving these problems.

In an embodiment, the data packet information includes at least one of: a size of to-be-transmitted data volume; a data volume threshold configured by a network; or whether the size of the to-be-transmitted data volume exceeds the data volume threshold configured by the network.

That is, the terminal device may report a specific size of the to-be-transmitted data volume, i.e., a pending data volume or a data volume buffered; may also report the data volume threshold configured by the network; and may also report whether the size of the data volume transmitted by the network exceeds the data volume threshold configured by the network. In this way, the network side device may determine, based on the data volume information reported by the terminal device, whether the transmission failure occurs due to an unreasonable configured data volume threshold, and determine whether the configured data volume threshold needs to be increased or decreased, and then may optimize and adjust data volume threshold configuration parameters according to the determination result.

In an embodiment, the TA information includes at least one of: a TA value, a TA valid time, whether the TA valid time is exceeded, or Synchronization Signal and PBCH block (SSB) information corresponding to the CG resource.

That is, the terminal device may report the TA value, the TA valid time, whether the TA valid time is exceeded or other information when the data is transmitted using the CG resource, and may also report the SSB information corresponding to the CG resource. In this way, the network side device may determine, based on the TA information reported by the terminal device, whether the transmission failure occurs due to an unreasonable TA threshold configured by the network, or determine whether the TA threshold configured by the network is too large or too small, and then may optimize and adjust TA threshold configuration parameters according to the determination result.

In an embodiment, the RSRP information includes at least one of: an RSRP value when the data is transmitted; an RSRP threshold configured by a network when an SDT is selected; an RSRP threshold configured by the network when a non-SDT is selected; an RSRP threshold configured by the network and corresponding to an SSB sent when the SDT is selected; whether the RSRP value when the data is transmitted is higher than the RSRP threshold configured by the network when the SDT is selected; whether the RSRP value when the data is transmitted is higher than the RSRP threshold configured by the network when the non-SDT is selected; whether the RSRP value when the data is transmitted is higher than the RSRP threshold configured by the network and corresponding to the SSB sent when the SDT is selected; or whether the RSRP value when the data is transmitted is higher than an RSRP threshold corresponding to a valid CG resource.

That is, the terminal device may report one or more of: the RSRP value when the data is transmitted, the RSRP threshold configured by the network when the SDT is selected, the RSRP threshold when the non-SDT is selected, the RSRP threshold corresponding to the SSB sent when the SDT is selected, whether the RSRP value when the data is transmitted is higher than or lower than the RSRP threshold when the SDT is used, whether the RSRP value is higher than or lower than the RSRP threshold when the non-SDT is used, whether the RSRP value is higher than or lower than the RSRP threshold corresponding to the SSB sent when the SDT is used, whether the RSRP value when the data is transmitted is higher than the RSRP threshold corresponding to the valid CG resource, or the like. In this way, the network side device may determine, based on the RSRP information reported by the terminal device, whether the transmission failure occurs due to an unreasonable currently-configured RSRP threshold for selecting the SDT or due to an unreasonable configured RSRP threshold for selecting the non-SDT, and determine what kind of adjustment is required, and then may optimize and adjust corresponding RSRP threshold configuration parameters according to the determination result correspondingly.

In an embodiment, the transmission type information indicates that a CG or a random access procedure is used when the data is transmitted.

Optionally, the transmission type information further indicates that a 2-step random access or a 4-step random access is selected when the data is transmitted using an RACH.

That is, the terminal device may report whether the data is transmitted using the CG or RACH, and may further report whether a 2-step RACH procedure or a 4-step RACH procedure is selected when the data is transmitted using the RACH. In this way, the network side device may determine, based on the transmission type information reported by the terminal device, whether the transmission fails since which type of resource configuration is problematic, or determine whether the RSRP threshold of this type needs to be adjusted, or the like, and then may optimize and adjust configuration parameters of this type according to the determination result.

In an embodiment, the fallback information indicates a fallback from a use of a CG to a use of a 2-step RACH or a fallback from the use of the 2-step RACH to a use of a 4-step RACH, when the data is transmitted.

If a fallback from the CG to the 2-step RACH occurs when the terminal device transmits the data packet, that is, a fallback from the use of the CG to transmit the data packet to the use of the 2-step RACH to transmit the data packet occurs, or if a fallback from the 2-step RACH to the 4-step RACH occurs when the terminal device transmits the data packet, that is, a fallback from the use of the 2-step RACH to transmit the data packet to the use of the 4-step RACH to transmit the data packet occurs, then the fallback information is logged and reported to the network side device. In this way, the network side device may determine, based on the fallback information reported by the terminal device, which type of resource configuration is problematic, and determine how to adjust the resource configuration of this type, or the like, and then may optimize and adjust configuration parameters of this type according to the determination result correspondingly.

In an embodiment, the transmission resource information indicates that the CG resource or a PUSCH resource is used when the data is transmitted.

That is, the terminal device may report whether the CG resource or the PUSCH resource is used when the data is transmitted. In case of using the PUSCH resource, a PUSCH transmission power may also be reported. In this way, the network side device may determine, based on the transmission resource information reported by the terminal device, whether the transmission failure occurs due to an unreasonable allocated transmission resource, or determine whether the transmission resource needs to be re-allocated, or the like, and then may optimize and adjust configuration parameters of the transmission resource according to the determination result.

In an embodiment, the carrier information indicates that an SUL carrier or a UL carrier is used when the data is transmitted.

That is, the terminal device may report whether the SUL carrier or the UL carrier is selected when the data is transmitted. In this way, the network side device may determine, based on the carrier information reported by the terminal device, whether there is a problem of an unreasonable allocation of a carrier resource when the transmission fails, and then may optimize and adjust configuration parameters of the carrier resource according to the determination result.

It should be noted that the terminal device may report one or more of the above relevant information based on a configuration of the network side device, that is, the network side device may configure which relevant information to be reported by the terminal device, or, it may be specified by a protocol which ones of the above relevant information are logged and reported by the terminal device.

In an embodiment, the method further includes the following operation after the operation 102.

Target configuration information is received from the network side device, and the target configuration information is obtained by the network side device after adjusting configuration information for data transmission in the RRC inactive state based on the relevant information.

In an implementation, after performing a rationality analysis on the configuration information for the data transmission in the RRC inactive state based on the relevant information reported by the terminal device, the network side device may optimize and adjust unreasonable configuration information, to obtain adjusted target configuration information, and send the target configuration information to the terminal device. In this way, after reporting the relevant information, the terminal device may receive the target configuration information from the network side device, and subsequently transmit the data packet in the RRC inactive state based on the target configuration information, to improve a success rate of transmitting the data packet.

Implementations of the disclosure are exemplified below by combining multiple scenarios where different information is reported with corresponding network side behaviors.

First scenario: the terminal device reports small packet transmission failure information, an RSRP value, a data volume value, and resources used for transmission, to help the network side device to determine whether an RSRP threshold currently configured to select an SDT or a non-SDT, a data volume threshold, and resources allocated to transmit the small packet are problematic, and how to adjust them. After analysis and judgment, the network side device may send, to the terminal device, an RSRP threshold for selecting the SDT or the non-SDT, a data volume threshold, and resources used for transmission, including a CG resource configuration, a PUSCH resource configuration of a 2-step RACH, etc.

For example, the network side device configures the terminal device with a data volume threshold of 100 bytes, an RSRP threshold for selecting the SDT as -100 dBm, and a corresponding CG transmission resource. The data packet currently required to be transmitted by the terminal device has a size of 90 bytes, and an RSRP value is -95 dBm, which meets conditions for transmitting the small packet data using the CG resource, and the terminal device initiates the data packet transmission using the resource. However, the network side device does not demodulate it successfully, and does not send a feedback message to the terminal device, so that the terminal device considers that data transmission at this time fails.

The terminal device logs and reports the above relevant information to the network side device. The network side device learns that the terminal device meets the conditions set by the network and initiates the SDT, but has failed. Therefore, the network side device determines, based on the relevant information reported by multiple terminal devices in combination with information on a location of a terminal device where the failure has occurred, whether a set RSRP threshold, a set data volume threshold and allocated resources are problematic. Potential problems include a currently set RSRP value not being sufficient for a current size of data packet to be transmitted correctly with a current given resource, or the data volume threshold being set so low that a current resource cannot transmit the data packet meeting the threshold.

Second scenario: the terminal device reports TA information and RSRP information, to help the network side device to determine whether the TA information currently configured for the terminal device or an RSRP threshold configured to determine whether TA is reasonable, is reasonable.

Specifically, since it is not required to initiate a random access when sending the small packet data by using the CG resource, the TA of the terminal device needs to remain unchanged or within a certain range, to ensure that the network side device receives data from the terminal device within a Cyclic Prefix (CP), and thus ensure a normal reception of the data. The network side device needs to configure a TA value when RRC is released, and subsequently updates the configuration using a TA command. Therefore, if the terminal device meets conditions configured by the network side device, for example, a TA timer has not expired and the RSRP meets the threshold, but has failed when attempting to initiate the small packet data transmission, the network side device may know the TA value and the RSRP used by the terminal device when it initiates the small packet data transmission, and determine whether the TA value configured by the network side device is too large or too small, or whether the RSRP threshold for determining a TA availability is reasonable.

Third scenario: the terminal device reports a type selected and used for the SDT, such as a CG or RACH, and if the RACH type is used, whether a 2-step RACH or a 4-step RACH is selected to transmit the small data packet, or reports a fallback that occurs during transmission, which helps the network side device to determine whether the SDT fails since which type of configuration is problematic, or which are used by the network side device to distinguish whether the RACH fails due to an unreasonable configuration of the RSRP threshold of the SDT RACH type or an unreasonable configuration of an RSRP of a traditional RACH type.

Fourth scenario: the terminal device reports whether an SUL carrier or a UL carrier is selected for the SDT, a current RSRP measurement result, and a used resource. For the SDT using an RACH, reported information includes an RACH occasion (RO), a preamble division and a UL grant resource; and for the SDT using a CG, the reported information includes a CG resource. Since the RACH and CG for the SDT are configured by the network side device separately from the non-SDT, the network side device may determine that the random access in error is a random access triggered by the small packet, rather than a traditional random access.

In the method for reporting information in the embodiments of the disclosure, the terminal device acquires or logs the relevant information when the data is transmitted in the RRC inactive state, and reports the relevant information to the network side device. In this way, the terminal device may log the relevant information when the data is transmitted in the RRC inactive state and report the relevant information to the network side device, so that the network side device may obtain the feedback information during transmission, which helps the network side device to analyze whether the configuration information for data transmission in the RRC inactive state is reasonable based on the obtained feedback information, and then improve the network performance by optimizing the unreasonable configuration information.

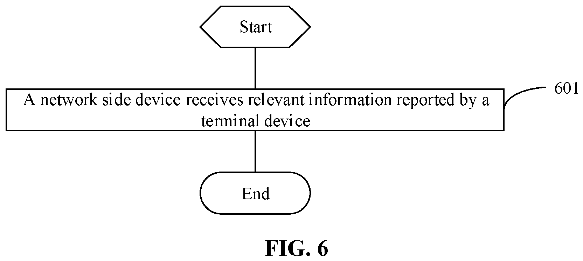

With reference to FIG. 6, FIG. 6 is a flowchart of another method for reporting information provided in an embodiment of the disclosure, and as shown in FIG. 6, the method includes the following operation 601.

In operation 601, a network side device receives relevant information reported by a terminal device, and the relevant information is acquired or logged by the terminal device during data transmission in an RRC inactive state.

In an embodiment, the operation 601 includes the following actions.

The network side device receives an indication message from the terminal device, and the indication message indicates that the terminal device logs the relevant information.

An information reporting request is sent to the terminal device.

The relevant information reported by the terminal device is received.

In an embodiment, the method further includes the following operations after the operation 601.

The network side device performs a rationality analysis on configuration information for data transmission in the RRC inactive state based on the relevant information.

The configuration information is adjusted when the configuration information is determined to be unreasonable, to obtain target configuration information.

The target configuration information is sent to the terminal device.

In an embodiment, the relevant information includes at least one of: data packet information; TA information in case that data is transmitted using a CG resource; RSRP information; transmission type information; fallback information generated when the data is transmitted; transmission resource information; power ramping step information when a preamble is sent to the network side device; carrier information; BWP information; number of transmission failures; a logical channel scheduling request delay timer; or a T319a timer.

In an embodiment, the data packet information includes at least one of: a size of to-be-transmitted data volume; a data volume threshold configured by a network; or whether the size of the to-be-transmitted data volume exceeds the data volume threshold configured by the network.

In an embodiment, the TA information includes at least one of: a TA value, a TA valid time, whether the TA valid time is exceeded, or SSB information corresponding to the CG resource.

In an embodiment, the RSRP information includes at least one of: an RSRP value when the data is transmitted; an RSRP threshold configured by a network when an SDT is selected; an RSRP threshold configured by the network when a non-SDT is selected; an RSRP threshold configured by the network and corresponding to an SSB sent when the SDT is selected; whether the RSRP value when the data is transmitted is higher than the RSRP threshold configured by the network when the SDT is selected; whether the RSRP value when the data is transmitted is higher than the RSRP threshold configured by the network when the non-SDT is selected; whether the RSRP value when the data is transmitted is higher than the RSRP threshold configured by the network and corresponding to the SSB sent when the SDT is selected; or whether the RSRP value when the data is transmitted is higher than an RSRP threshold corresponding to a valid CG resource.

In an embodiment, the transmission type information indicates that a CG or a random access procedure is used when the data is transmitted.

Optionally, the transmission type information further indicates that a 2-step random access or a 4-step random access is selected when the data is transmitted using an RACH.

In an embodiment, the fallback information indicates a fallback from a use of a CG to a use of a 2-step RACH or a fallback from the use of the 2-step RACH to a use of a 4-step RACH, when the data is transmitted.

In an embodiment, the transmission resource information indicates that the CG resource or a PUSCH resource is used when the data is transmitted.

In an embodiment, the carrier information indicates that an SUL carrier or a UL carrier is used when the data is transmitted.

It should be noted that the embodiment is an implementation of the network side device corresponding to the embodiment shown in FIG. 1, and a specific implementation thereof may refer to the relevant introduction of the above embodiment shown in FIG. 1, which is not elaborated herein to avoid repetition.

In the method for reporting information in the embodiment of the disclosure, the network side device receives the relevant information reported by the terminal device, and the relevant information is relevant information acquired or logged by the terminal device during data transmission in the RRC inactive state. In this way, the network side device may receive, from the terminal device, the relevant information during data transmission in the RRC inactive state, analyze whether the configuration information for data transmission in the RRC inactive state is reasonable based on the relevant information, and then may optimize the unreasonable configuration information to improve the network performance.

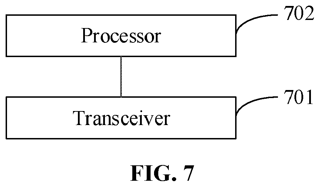

An embodiment of the disclosure further provides a terminal device. With reference to FIG. 7, FIG. 7 is a structural diagram of a terminal device provided in an embodiment of the disclosure. Since principles for the terminal device to solve problems are similar to that of the method for reporting information in the embodiments of the disclosure, an implementation of the terminal device may refer to the implementation of the method, and repetitions there-between are not elaborated.

As shown in FIG. 7, the terminal device includes a transceiver 701 and a processor 702.

The processor 702 is configured to acquire or log relevant information during data transmission in an RRC inactive state.

The transceiver 701 is configured to report the relevant information to a network side device.

In an embodiment, the transceiver 701 is further configured to perform one of: reporting the relevant information to the network side device in an RRC connected state; reporting the relevant information to the network side device during a transition to the RRC connected state; reporting the relevant information to the network side device in the RRC inactive state; or reporting the relevant information to the network side device during a random access procedure.

In an embodiment, the transceiver 701 is further configured to report the relevant information to the network side device based on a request from the network side device.

In an embodiment, the transceiver 701 is further configured to: send an indication message to the network side device, the indication message indicating that the terminal device logs the relevant information; receive an information reporting request from the network side device; and report the relevant information to the network side device in response to the information reporting request.

In an embodiment, the transceiver 701 is further configured to receive target configuration information from the network side device. The target configuration information is obtained by the network side device after adjusting configuration information for data transmission in the RRC inactive state based on the relevant information.

In an embodiment, the relevant information includes at least one of: data packet information; TA information in case that data is transmitted using a CG resource; RSRP information; transmission type information; fallback information generated when the data is transmitted; transmission resource information; power ramping step information when a preamble is sent to the network side device; carrier information; BWP information; number of transmission failures; a logical channel scheduling request delay timer; or a T319a timer.

In an embodiment, the data packet information includes at least one of: a size of to-be-transmitted data volume; a data volume threshold configured by a network; or whether the size of the to-be-transmitted data volume exceeds the data volume threshold configured by the network.

In an embodiment, the TA information includes at least one of: a TA value, a TA valid time, whether the TA valid time is exceeded, or SSB information corresponding to the CG resource.

In an embodiment, the RSRP information includes at least one of: an RSRP value when the data is transmitted; an RSRP threshold configured by a network when an SDT is selected; an RSRP threshold configured by the network when a non-SDT is selected; an RSRP threshold configured by the network and corresponding to an SSB sent when the SDT is selected; whether the RSRP value when the data is transmitted is higher than the RSRP threshold configured by the network when the SDT is selected; whether the RSRP value when the data is transmitted is higher than the RSRP threshold configured by the network when the non-SDT is selected; whether the RSRP value when the data is transmitted is higher than the RSRP threshold configured by the network and corresponding to the SSB sent when the SDT is selected; or whether the RSRP value when the data is transmitted is higher than an RSRP threshold corresponding to a valid CG resource.

In an embodiment, the transmission type information indicates that a CG or a random access procedure is used when the data is transmitted.

Optionally, the transmission type information further indicates that a 2-step random access or a 4-step random access is selected when the data is transmitted using an RACH.

In an embodiment, the fallback information indicates a fallback from a use of a CG to a use of a 2-step RACH or a fallback from the use of the 2-step RACH to a use of a 4-step RACH, when the data is transmitted.

In an embodiment, the transmission resource information indicates that the CG resource or a PUSCH resource is used when the data is transmitted.

In an embodiment, the carrier information indicates that an SUL carrier or a UL carrier is used when the data is transmitted.

The terminal device provided in the embodiment of the disclosure may execute the above method embodiment, and their implementation principles and technical effects are similar, which are not elaborated here in the embodiment.

The terminal device in the embodiment of the disclosure acquires or logs the relevant information during data transmission in the RRC inactive state, and reports the relevant information to the network side device. In this way, the terminal device may logging the relevant information during data transmission in the RRC inactive state and reporting the relevant information to the network side device, so that the network side device may obtain the feedback information during the transmission, which helps the network side device to analyze whether the configuration information for data transmission in the RRC inactive state is reasonable based on the obtained feedback information, and then improve the network performance by optimizing the unreasonable configuration information.

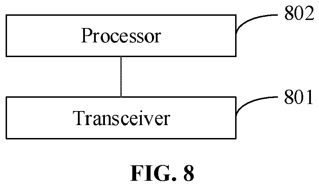

An embodiment of the disclosure further provides a network side device. With reference to FIG. 8, FIG. 8 is a structural diagram of a network side device provided in an embodiment of the disclosure. Since principles for the network side device to solve problems are similar to that the method for reporting information in the embodiments of the disclosure, an implementation of the network side device may refer to the implementation of the method, and repetitions there-between are not elaborated.

As shown in FIG. 8, the network side device includes a transceiver 801 and a processor 802.

The transceiver 801 is configured to receive relevant information reported by a terminal device. The relevant information is acquired or logged by the terminal device during data transmission in an RRC inactive state.

In an embodiment, the processor 802 is configured to: perform a rationality analysis on configuration information for data transmission in the RRC inactive state based on the relevant information; and adjust the configuration information when the configuration information is determined to be unreasonable, to obtain target configuration information.

The transceiver 801 is further configured to send the target configuration information to the terminal device.

In an embodiment, the transceiver 801 is further configured to: receive an indication message from the terminal device, the indication message indicating that the terminal device logs the relevant information; send an information reporting request to the terminal device; and receive the relevant information reported by the terminal device.

In an embodiment, the relevant information includes at least one of: data packet information; TA information in case that data is transmitted using a CG resource; RSRP information; transmission type information; fallback information generated when the data is transmitted; transmission resource information; power ramping step information when a preamble is sent to the network side device; carrier information; BWP information; number of transmission failures; a logical channel scheduling request delay timer; or a T319a timer.

In an embodiment, the data packet information includes at least one of: a size of to-be-transmitted data volume; a data volume threshold configured by a network; or whether the size of the to-be-transmitted data volume exceeds the data volume threshold configured by the network.

In an embodiment, the TA information includes at least one of: a TA value, a TA valid time, whether the TA valid time is exceeded, or SSB information corresponding to the CG resource.

In an embodiment, the RSRP information includes at least one of: an RSRP value when the data is transmitted; an RSRP threshold configured by a network when an SDT is selected; an RSRP threshold configured by the network when a non-SDT is selected; an RSRP threshold configured by the network and corresponding to an SSB sent when the SDT is selected; whether the RSRP value when the data is transmitted is higher than the RSRP threshold configured by the network when the SDT is selected; whether the RSRP value when the data is transmitted is higher than the RSRP threshold configured by the network when the non-SDT is selected; whether the RSRP value when the data is transmitted is higher than the RSRP threshold configured by the network and corresponding to the SSB sent when the SDT is selected; or whether the RSRP value when the data is transmitted is higher than an RSRP threshold corresponding to a valid CG resource.

In an embodiment, the transmission type information indicates that a CG or a random access procedure is used when the data is transmitted.

Optionally, the transmission type information further indicates that a 2-step random access or a 4-step random access is selected when the data is transmitted using an RACH.

In an embodiment, the fallback information indicates a fallback from a use of a CG to a use of a 2-step RACH or a fallback from the use of the 2-step RACH to a use of a 4-step RACH, when the data is transmitted.

In an embodiment, the transmission resource information indicates that the CG resource or a PUSCH resource is used when the data is transmitted.

In an embodiment, the carrier information indicates that an SUL carrier or a UL carrier is used when the data is transmitted.

The network side device provided in the embodiment of the disclosure may execute the above method embodiment, and their implementation principles and technical effects are similar, which are not elaborated here in the embodiment.

The network side device in the embodiment of the disclosure receives the relevant information reported by the terminal device, and the relevant information is relevant information acquired or logged by the terminal device during data transmission in the RRC inactive state. In this way, the network side device may receive, from the terminal device, the relevant information during data transmission in the RRC inactive state, analyze whether the configuration information for the data transmission in the RRC inactive state is reasonable based on the relevant information, and then may optimize the unreasonable configuration information to improve the network performance.

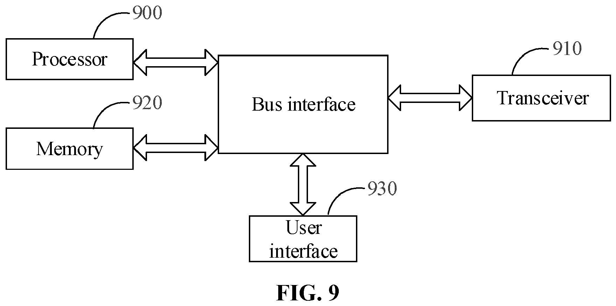

An embodiment of the disclosure further provides a terminal device. Since principles for the terminal device to solve problems are similar to that the method for reporting information in the embodiments of the disclosure, an implementation of the terminal device may refer to the implementation of the method, and repetitions there-between are not elaborated. As shown in FIG. 9, the terminal device in the embodiment of the disclosure includes a processor 900, a transceiver 910 and a memory 920.

The processor 900 is configured to read a program in the memory 920 to: acquire or log relevant information during data transmission in an RRC inactive state; and report the relevant information to a network side device through the transceiver 910.

The transceiver 910 is controlled by the processor 900 to receive and send data.

In FIG. 9, a bus architecture may include any number of interconnected buses and bridges. Specifically, various circuits such as one or more processors represented by the processor 900 and memories represented by the memory 920 are linked together. The bus architecture may also link various other circuits together, such as a peripheral device, a voltage regulator, a power management circuit, or the like, which are well known in the art and thus are not further described here. A bus interface provides an interface. The transceiver 910 may be of multiple elements including a transmitter and a transceiver, to provide a unit for communicating with various other apparatuses over a transmission medium. For different user devices, a user interface 930 may be an interface capable of connecting to a desired device externally or internally, and the connected device includes, but is not limited to a keypad, a display, a speaker, a microphone, a joystick, etc. The processor 900 is responsible for managing the bus architecture and usual processing, and the memory 920 may store data used by the processor 900 when it executes operations.

In an embodiment, the processor 900 is further configured to read the program in the memory 920 to execute one of: reporting, through the transceiver 910, the relevant information to the network side device in an RRC connected state; reporting, through the transceiver 910, the relevant information to the network side device during a transition to the RRC connected state; reporting, through the transceiver 910, the relevant information to the network side device in the RRC inactive state; or reporting, through the transceiver 910, the relevant information to the network side device during a random access procedure.

In an embodiment, the processor 900 is further configured to read the program in the memory 920 to report, through the transceiver 910, the relevant information to the network side device based on a request from the network side device.

In an embodiment, the processor 900 is further configured to read the program in the memory 920 to: send an indication message to the network side device through the transceiver 910, the indication message indicating that the terminal device logs the relevant information; receive an information reporting request from the network side device through the transceiver 910; and report, through the transceiver 910, the relevant information to the network side device in response to the information reporting request.

In an embodiment, the processor 900 is further configured to read the program in the memory 920 to receive target configuration information from the network side device through the transceiver 910. The target configuration information is obtained by the network side device after adjusting configuration information for data transmission in the RRC inactive state based on the relevant information.

In an embodiment, the relevant information includes at least one of: data packet information; TA information in case that data is transmitted using a CG resource; RSRP information; transmission type information; fallback information generated when the data is transmitted; transmission resource information; power ramping step information when a preamble is sent to the network side device; carrier information; BWP information; number of transmission failures; a logical channel scheduling request delay timer; or a T319a timer.

In an embodiment, the data packet information includes at least one of: a size of to-be-transmitted data volume; a data volume threshold configured by a network; or whether the size of the to-be-transmitted data volume exceeds the data volume threshold configured by the network.

In an embodiment, the TA information includes at least one of: a TA value, a TA valid time, whether the TA valid time is exceeded, or SSB information corresponding to the CG resource.

In an embodiment, the RSRP information includes at least one of: an RSRP value when the data is transmitted; an RSRP threshold configured by a network when an SDT is selected; an RSRP threshold configured by the network when a non-SDT is selected; an RSRP threshold configured by the network and corresponding to an SSB sent when the SDT is selected; whether the RSRP value when the data is transmitted is higher than the RSRP threshold configured by the network when the SDT is selected; whether the RSRP value when the data is transmitted is higher than the RSRP threshold configured by the network when the non-SDT is selected; whether the RSRP value when the data is transmitted is higher than the RSRP threshold configured by the network and corresponding to the SSB sent when the SDT is selected; or whether the RSRP value when the data is transmitted is higher than an RSRP threshold corresponding to a valid CG resource.

In an embodiment, the transmission type information indicates that a CG or a random access procedure is used when the data is transmitted.

Optionally, the transmission type information further indicates that a 2-step random access or a 4-step random access is selected when the data is transmitted using an RACH.

In an embodiment, the fallback information indicates a fallback from a use of a CG to a use of a 2-step RACH or a fallback from the use of the 2-step RACH to a use of a 4-step RACH, when the data is transmitted.

In an embodiment, the transmission resource information indicates that the CG resource or a PUSCH resource is used when the data is transmitted.

In an embodiment, the carrier information indicates that an SUL carrier or a UL carrier is used when the data is transmitted.

The terminal device provided in the embodiment of the disclosure may execute the above method embodiment, and their implementation principles and technical effects are similar, which are not elaborated here in the embodiment.

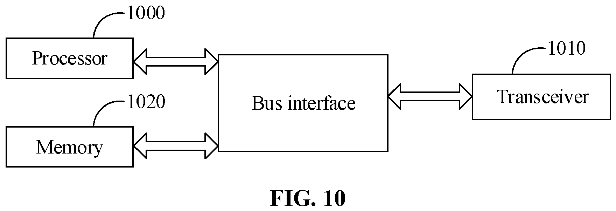

An embodiment of the disclosure further provides a network side device. Since principles for the network side device to solve problems are similar to that of the method for reporting information in the embodiments of the disclosure, an implementation of the network side device may refer to the implementation of the method, and repetitions there-between are not elaborated. As shown in FIG. 10, the network side device in the embodiment of the disclosure includes a processor 1000, a transceiver 1010 and a memory 1020.

The processor 1000 is configured to read a program in the memory 1020 to receive relevant information reported by a terminal device through the transceiver 1010. The relevant information is acquired or logged by the terminal device during data transmission in an RRC inactive state.

The transceiver 1010 is controlled by the processor 1000 to receive and send data.

In FIG. 10, a bus architecture may include any number of interconnected buses and bridges. Specifically, various circuits such as one or more processors represented by the processor 1000 and memories represented by the memory 1020 are linked together. The bus architecture may also link various other circuits together, such as a peripheral device, a voltage regulator, a power management circuit, or the like, which are well known in the art and thus are not further described here. A bus interface provides an interface. The transceiver 1010 may be of multiple elements including a transmitter and a transceiver, to provide a unit for communicating with various other apparatuses over a transmission medium. The processor 1000 is responsible for managing the bus architecture and usual processing, and the memory 1020 may store data used by the processor 1000 when it executes operations.

In an embodiment, the processor 1000 is further configured to read the program in the memory 1020 to: perform a rationality analysis on configuration information for data transmission in the RRC inactive state based on the relevant information; adjust the configuration information when the configuration information is determined to be unreasonable, to obtain target configuration information; and send the target configuration information to the terminal device through the transceiver 1010.

In an embodiment, the processor 1000 is further configured to read the program in the memory 1020 to: receive an indication message from the terminal device through the transceiver 1010, the indication message indicating that the terminal device logs the relevant information; send an information reporting request to the terminal device through the transceiver 1010; and receive, through the transceiver 1010, the relevant information reported by the terminal device.

In an embodiment, the relevant information includes at least one of: data packet information; TA information in case that data is transmitted using a CG resource; RSRP information; transmission type information; fallback information generated when the data is transmitted; transmission resource information; power ramping step information when a preamble is sent to the network side device; carrier information; BWP information; number of transmission failures; a logical channel scheduling request delay timer; or a T319a timer.

In an embodiment, the data packet information includes at least one of: a size of to-be-transmitted data volume; a data volume threshold configured by a network; or whether the size of the to-be-transmitted data volume exceeds the data volume threshold configured by the network.

In an embodiment, the TA information includes at least one of: a TA value, a TA valid time, whether the TA valid time is exceeded, or SSB information corresponding to the CG resource.

In an embodiment, the RSRP information includes at least one of: an RSRP value when the data is transmitted; an RSRP threshold configured by a network when an SDT is selected; an RSRP threshold configured by the network when a non-SDT is selected; an RSRP threshold configured by the network and corresponding to an SSB sent when the SDT is selected; whether the RSRP value when the data is transmitted is higher than the RSRP threshold configured by the network when the SDT is selected; whether the RSRP value when the data is transmitted is higher than the RSRP threshold configured by the network when the non-SDT is selected; whether the RSRP value when the data is transmitted is higher than the RSRP threshold configured by the network and corresponding to the SSB sent when the SDT is selected; or whether the RSRP value when the data is transmitted is higher than an RSRP threshold corresponding to a valid CG resource.

In an embodiment, the transmission type information indicates that a CG or a random access procedure is used when the data is transmitted.

Optionally, the transmission type information further indicates that a 2-step random access or a 4-step random access is selected when the data is transmitted using an RACH.

In an embodiment, the fallback information indicates a fallback from a use of a CG to a use of a 2-step RACH or a fallback from the use of the 2-step RACH to a use of a 4-step RACH, when the data is transmitted.

In an embodiment, the transmission resource information indicates that the CG resource or a PUSCH resource is used when the data is transmitted.

In an embodiment, the carrier information indicates that an SUL carrier or a UL carrier is used when the data is transmitted.

The network side device provided in the embodiment of the disclosure may execute the above method embodiment, and their implementation principles and technical effects are similar, which are not elaborated here in the embodiment.

Furthermore, a computer-readable storage medium in an embodiment of the disclosure is configured to store a computer program that, when executed by a processor, causes the processor to implement operations of the method for reporting information shown in FIG. 1 or FIG. 6.

In several embodiments provided in the disclosure, it should be understood that the disclosed methods and apparatuses may be implemented in other manners. For example, the above apparatus embodiments are only illustrative. For example, division of the units is only a logical function division. In an actual implementation, there may be other division manners. For example, multiple units or components may be combined or may be integrated into another system, or some features may be ignored, or may not be executed. Furthermore, a mutual coupling or direct coupling or communication connection as shown or discussed may be an indirect coupling or communication connection through some interfaces, devices or units, and may be in electrical, mechanical or other forms.

Furthermore, each function unit in each embodiment of the disclosure may be integrated into a processing unit, or each unit may separately exist physically, or two or more units may be integrated into a unit. The above integrated unit may be implemented in form of hardware, or in form of hardware plus software function units.

When the above integrated unit is implemented in form of the software function units, it may be stored in a computer-readable storage medium. The above software function unit is stored in a storage medium, includes several instructions to enable a computer device (which may be a personal computer, a server, a network device, etc.) to execute part of operations of the method described in each embodiment of the disclosure. The foregoing storage medium includes various media capable of storing program codes, such as a U disk, a mobile hard disk, a Read Only Memory (ROM), a Random Access Memory (RAM), a magnetic disk, or an optical disk, etc.

The above descriptions are preferred implementations of the disclosure, and it should be noted that several improvements and embellishments may also be made by those of ordinary skill in the art without departing from principles described in the disclosure, and these improvements and embellishments shall also be considered to be within the scope of protection of the disclosure.

## Claims

1. A method for reporting information, comprising:
acquiring or logging, by a terminal device, relevant information during data transmission in a Radio Resource Control (RRC) inactive state; and
reporting the relevant information to a network side device.

2. The method of claim 1, wherein reporting the relevant information to the network side device comprises one of:
reporting the relevant information to the network side device in an RRC connected state;
reporting the relevant information to the network side device during a transition to the RRC connected state;
reporting the relevant information to the network side device in the RRC inactive state; or
reporting the relevant information to the network side device during a random access procedure.

3. The method of claim 1, wherein reporting the relevant information to the network side device comprises:
reporting the relevant information to the network side device based on a request from the network side device.

4. The method of claim 3, wherein reporting the relevant information to the network side device based on the request from the network side device comprises:
sending an indication message to the network side device, wherein the indication message indicates that the terminal device logs the relevant information;
receiving an information reporting request from the network side device; and
reporting the relevant information to the network side device in response to the information reporting request.

5. The method of claim 1, further comprising:
after reporting the relevant information to the network side device,
receiving target configuration information from the network side device, wherein the target configuration information is obtained by the network side device after adjusting configuration information during data transmission in the RRC inactive state based on the relevant information.

6. The method of claim 1, wherein the relevant information comprises at least one of:
data packet information;
Timing Advance (TA) information in case that data is transmitted using a Configured Grant (CG) resource;
Reference Signal Receiving Power (RSRP) information;
transmission type information;
fallback information generated when the data is transmitted;
transmission resource information;
power ramping step information when a preamble is sent to the network side device;
carrier information;
Bandwidth Part (BWP) information;
number of transmission failures;
a logical channel scheduling request delay timer; or
a T319a timer.

7. The method of claim 6, wherein the data packet information comprises at least one of:
a size of to-be-transmitted data volume;
a data volume threshold configured by a network; or
whether the size of the to-be-transmitted data volume exceeds the data volume threshold configured by the network.

8. The method of claim 6, wherein the TA information comprises at least one of: a TA value, a TA valid time, whether the TA valid time is exceeded, or Synchronization Signal and PBCH block (SSB) information corresponding to the CG resource.

9. The method of claim 6, wherein the RSRP information comprises at least one of:
an RSRP value when the data is transmitted;
an RSRP threshold configured by a network when a Small Data Transmission (SDT) is selected;
an RSRP threshold configured by the network when a non-SDT is selected;
an RSRP threshold configured by the network and corresponding to a Synchronization Signal and PBCH block (SSB) sent when the SDT is selected;
whether the RSRP value when the data is transmitted is higher than the RSRP threshold configured by the network when the SDT is selected;
whether the RSRP value when the data is transmitted is higher than the RSRP threshold configured by the network when the non-SDT is selected;
whether the RSRP value when the data is transmitted is higher than the RSRP threshold configured by the network and corresponding to the SSB sent when the SDT is selected; or
whether the RSRP value when the data is transmitted is higher than an RSRP threshold corresponding to a valid CG resource.

10. The method of claim 6, wherein
the transmission type information indicates that a CG or a random access procedure is used when the data is transmitted; or,
the transmission type information further indicates that a 2-step random access or a 4-step random access is selected when the data is transmitted using a Random Access Channel (RACH).

11. The method of claim 6, wherein the fallback information indicates a fallback from a use of a CG to a use of a 2-step Random Access Channel (RACH) or a fallback from the use of the 2-step RACH to a use of a 4-step RACH, when the data is transmitted.

12. The method of claim 6, wherein the transmission resource information indicates that the CG resource or a Physical Uplink Shared Channel (PUSCH) resource is used when the data is transmitted.

13. The method of claim 6, wherein the carrier information indicates that a Supplementary Uplink (SUL) carrier or an Uplink (UL) carrier is used when the data is transmitted.

14. A method for reporting information, comprising:
receiving, by a network side device, relevant information reported by a terminal device, wherein the relevant information is acquired or logged by the terminal device during data transmission in a Radio Resource Control (RRC) inactive state.

15. The method of claim 14, further comprising:
after the network side device receives the relevant information reported by the terminal device,
performing, by the network side device, a rationality analysis on configuration information for data transmission in the RRC inactive state based on the relevant information;
adjusting the configuration information when the configuration information is determined to be unreasonable, to obtain target configuration information; and
sending the target configuration information to the terminal device.

16. The method of claim 14, wherein receiving, by the network side device, the relevant information reported by the terminal device comprises:
receiving, by the network side device, an indication message from the terminal device, wherein the indication message indicates that the terminal device logs the relevant information;
sending an information reporting request to the terminal device; and
receiving the relevant information reported by the terminal device.

17. The method of claim 14, wherein the relevant information comprises at least one of:
data packet information;
Timing Advance (TA) information in case that data is transmitted using a Configured Grant (CG) resource;
Reference Signal Receiving Power (RSRP) information;
transmission type information;
fallback information generated when the data is transmitted;
transmission resource information;
power ramping step information when a preamble is sent to the network side device;
carrier information;
Bandwidth Part (BWP) information;
number of transmission failures;
a logical channel scheduling request delay timer; or
a T319a timer.

18. The method of claim 17, wherein the data packet information comprises at least one of:
a size of to-be-transmitted data volume;
a data volume threshold configured by a network; or
whether the size of the to-be-transmitted data volume exceeds the data volume threshold configured by the network.

19. The method of claim 17, wherein the TA information comprises at least one of: a TA value, a TA valid time, whether the TA valid time is exceeded, or Synchronization Signal and PBCH block (SSB) information corresponding to the CG resource.

20. The method of claim 17, wherein the RSRP information comprises at least one of:
an RSRP value when the data is transmitted;
an RSRP threshold configured by a network when a Small Data Transmission (SDT) is selected;
an RSRP threshold configured by the network when a non-SDT is selected;
an RSRP threshold configured by the network and corresponding to a Synchronization Signal and PBCH block (SSB) sent when the SDT is selected;
whether the RSRP value when the data is transmitted is higher than the RSRP threshold configured by the network when the SDT is selected;
whether the RSRP value when the data is transmitted is higher than the RSRP threshold configured by the network when the non-SDT is selected;
whether the RSRP value when the data is transmitted is higher than the RSRP threshold configured by the network and corresponding to the SSB sent when the SDT is selected; or
whether the RSRP value when the data is transmitted is higher than an RSRP threshold corresponding to a valid CG resource.

21. The method of claim 17, wherein
the transmission type information indicates that a CG or a random access procedure is used when the data is transmitted; or
the transmission type information further indicates that a 2-step random access or a 4-step random access is selected when the data is transmitted using the random access procedure.

22. The method of claim 17, wherein the fallback information indicates a fallback from a use of a CG to a use of a 2-step Random Access Channel (RACH) or a fallback from the use of the 2-step RACH to a use of a 4-step RACH, when the data is transmitted.

23. The method of claim 17, wherein the transmission resource information indicates that the CG resource or a Physical Uplink Shared Channel (PUSCH) resource is used when the data is transmitted.

24. The method of claim 17, wherein the carrier information indicates that a Supplementary Uplink (SUL) carrier or an Uplink (UL) carrier is used when the data is transmitted.

25. A terminal device, comprising a transceiver and a processor, wherein
the processor is configured to acquire or log relevant information during data transmission in a Radio Resource Control (RRC) inactive state, and
the transceiver is configured to report the relevant information to a network side device.

26. The terminal device of claim 25, wherein the transceiver is further configured to perform one of:
reporting the relevant information to the network side device in an RRC connected state;
reporting the relevant information to the network side device during a transition to the RRC connected state;
reporting the relevant information to the network side device in the RRC inactive state; or
reporting the relevant information to the network side device during a random access procedure.

27. The terminal device of claim 25, wherein the transceiver is further configured to report the relevant information to the network side device based on a request from the network side device.

28. The terminal device of claim 27, wherein the transceiver is further configured to:
send an indication message to the network side device, wherein the indication message indicates that the terminal device logs the relevant information;
receive an information reporting request from the network side device; and
report the relevant information to the network side device in response to the information reporting request.

29. The terminal device of claim 25, wherein the transceiver is further configured to receive target configuration information from the network side device, wherein the target configuration information is obtained by the network side device after adjusting configuration information for data transmission in the RRC inactive state based on the relevant information.

30. The terminal device of claim 25, wherein the relevant information comprises at least one of:
data packet information;
Timing Advance (TA) information in case that data is transmitted using a Configured Grant (CG) resource;
Reference Signal Receiving Power (RSRP) information;
transmission type information;
fallback information generated when the data is transmitted;
transmission resource information;
power ramping step information when a preamble is sent to the network side device;
carrier information;
Bandwidth Part (BWP) information;
number of transmission failures;
a logical channel scheduling request delay timer; or
a T319a timer.

31. The terminal device of claim 30, wherein the data packet information comprises at least one of:
a size of to-be-transmitted data volume;
a data volume threshold configured by a network; or
whether the size of the to-be-transmitted data volume exceeds the data volume threshold configured by the network.

32. The terminal device of claim 30, wherein the TA information comprises at least one of: a TA value, a TA valid time, whether the TA valid time is exceeded, or Synchronization Signal and PBCH block (SSB) information corresponding to the CG resource.

33. The terminal device of claim 30, wherein the RSRP information comprises at least one of:
an RSRP value when the data is transmitted;
an RSRP threshold configured by a network when a Small Data Transmission (SDT) is selected;
an RSRP threshold configured by the network when a non-SDT is selected;
an RSRP threshold configured by the network and corresponding to a Synchronization Signal and PBCH block (SSB) sent when the SDT is selected;
whether the RSRP value when the data is transmitted is higher than the RSRP threshold configured by the network when the SDT is selected;
whether the RSRP value when the data is transmitted is higher than the RSRP threshold configured by the network when the non-SDT is selected;
whether the RSRP value when the data is transmitted is higher than the RSRP threshold configured by the network and corresponding to the SSB sent when the SDT is selected; or
whether the RSRP value when the data is transmitted is higher than an RSRP threshold corresponding to a valid CG resource.

34. The terminal device of claim 30, wherein
the transmission type information indicates that a CG or a random access procedure is used when the data is transmitted; or
the transmission type information further indicates that a 2-step random access or a 4-step random access is selected when the data is transmitted using a Random Access Channel (RACH).

35. The terminal device of claim 30, wherein the fallback information indicates a fallback from a use of a CG to a use of a 2-step Random Access Channel (RACH) or a fallback from the use of the 2-step RACH to a use of a 4-step RACH, when the data is transmitted.

36. The terminal device of claim 30, wherein the transmission resource information indicates that the CG resource or a Physical Uplink Shared Channel (PUSCH) resource is used when the data is transmitted.

37. The terminal device of claim 30, wherein the carrier information indicates that a Supplementary Uplink (SUL) carrier or an Uplink (UL) carrier is used when the data is transmitted.

38. A network side device, comprising a transceiver and a processor, wherein
the transceiver is configured to receive relevant information reported by a terminal device, wherein the relevant information is acquired or logged by the terminal device during data transmission in a Radio Resource Control (RRC) inactive state.

39. The network side device of claim 38, wherein the processor is configured to: perform a rationality analysis on configuration information for data transmission in the RRC inactive state based on the relevant information; and adjust the configuration information when the configuration information is determined to be unreasonable, to obtain target configuration information,
the transceiver is further configured to send the target configuration information to the terminal device.

40. The network side device of claim 38, wherein the transceiver is further configured to:
receive an indication message from the terminal device, wherein the indication message indicates that the terminal device logs the relevant information;
send an information reporting request to the terminal device; and
receive the relevant information reported by the terminal device.

41. The network side device of claim 38, wherein the relevant information comprises at least one of:
data packet information;
Timing Advance (TA) information in case that data is transmitted using a Configured Grant (CG) resource;
Reference Signal Receiving Power (RSRP) information;
transmission type information;
fallback information generated when the data is transmitted;
transmission resource information;
power ramping step information when a preamble is sent to the network side device;
carrier information;
Bandwidth Part (BWP) information;
number of transmission failures;
a logical channel scheduling request delay timer; or
a T319a timer.

42. The network side device of claim 41, wherein the data packet information comprises at least one of:
a size of to-be-transmitted data volume;
a data volume threshold configured by a network; or
whether the size of the to-be-transmitted data volume exceeds the data volume threshold configured by the network.

43. The network side device of claim 41, wherein the TA information comprises at least one of: a TA value, a TA valid time, whether the TA valid time is exceeded, or Synchronization Signal and PBCH block (SSB) information corresponding to the CG resource.

44. The network side device of claim 41, wherein the RSRP information comprises at least one of:
an RSRP value when the data is transmitted;
an RSRP threshold configured by a network when a Small Data Transmission (SDT) is selected;
an RSRP threshold configured by the network when a non-SDT is selected;
an RSRP threshold configured by the network and corresponding to a Synchronization Signal and PBCH block (SSB) sent when the SDT is selected;
whether the RSRP value when the data is transmitted is higher than the RSRP threshold configured by the network when the SDT is selected;
whether the RSRP value when the data is transmitted is higher than the RSRP threshold configured by the network when the non-SDT is selected;
whether the RSRP value when the data is transmitted is higher than the RSRP threshold configured by the network and corresponding to the SSB sent when the SDT is selected; or
whether the RSRP value when the data is transmitted is higher than an RSRP threshold corresponding to a valid CG resource.

45. The network side device of claim 41, wherein
the transmission type information indicates that a CG or a random access procedure is used when the data is transmitted; or
the transmission type information further indicates that a 2-step random access or a 4-step random access is selected when the data is transmitted using a Random Access Channel (RACH).

46. The network side device of claim 41, wherein the fallback information indicates a fallback from a use of a CG to a use of a 2-step Random Access Channel (RACH) or a fallback from the use of the 2-step RACH to a use of a 4-step RACH, when the data is transmitted.

47. The network side device of claim 41, wherein the transmission resource information indicates that the CG resource or a Physical Uplink Shared Channel (PUSCH) resource is used when the data is transmitted.

48. The network side device of claim 41, wherein the carrier information indicates that a Supplementary Uplink (SUL) carrier or an Uplink (UL) carrier is used when the data is transmitted.

49. A terminal device, comprising: a transceiver, a memory, a processor, and a computer program stored on the memory and executable on the processor, wherein the processor is configured to read the program in the memory to implement steps of the method for reporting information of any one of claims 1 to 13.

50. A network side device, comprising: a transceiver, a memory, a processor, and a computer program stored on the memory and executable on the processor, wherein the processor is configured to read the program in the memory to implement steps of the method for reporting information of any one of claims 14 to 24.

51. A computer-readable storage medium, configured to store a computer program that, when executed by a processor, causes the processor to implement steps of the method for reporting information of any one of claims 1 to 13, or to implement steps of the method for reporting information of any one of claims 14 to 24.
